# EUROPEAN PATENT APPLICATION

(11) **EP 1 666 932 A1**
(43) Date of publication of application: **07.06.2006**
(21) Application number: 04816205.1
(22) Date of filing: 15.09.2004
(51) Int. Cl.: G02B 5/30, G02F 1/1335

(54) **POLARIZING FILM, POLARIZING PLATE AND LIQUID CRYSTAL DISPLAY DEVICE**

(30) Priority: 19.09.2003 JP 2003327314
(71) Applicant: NIPPON KAYAKU KABUSHIKI KAISHA, Tokyo 102-8172 (JP); Polatechno Co., Ltd, Nakakubiki-gun, Niigata 944-0101 (JP)
(72) Inventor: OKADA, Masaru, Nakakubiki-gun, Niigata 9420102 (JP); YOSHIDA, Tatsuya, Joetsu-shi, Niigata 943-0841 (JP); IKEZU, Satomi, Joetsu-shi, niigata 943-0892 (JP)
(74) Representative: Gille Hrabal Struck Neidlein Prop Roos
(86) International application number: PCT/JP2004/013413
(87) International publication number: WO 2005/029143

(57) **Abstract**

A polarizing film which comprises a polyvinyl alcohol-based resin film and iodine being adsorbed thereon and oriented, and is prepared, for example, by subjecting the polyvinyl alcohol-based resin film to a dyeing treatment, to a stretching treatment, to a boric acid treatment and further to a complementary color treatment in which the film is immersed in a solution containing a chlorinated compound. The polarizing film is so adjusted as to have a boric acid content of 5 to 40 weight % by the dyeing treatment, stretching treatment and boric acid treatment, and also to have a chlorine ion content of 200 to 10,000 ppm by the complementary color treatment. The above polarizing film retains an achromatic hue when it is arranged at a parallel Nicol position, and also exhibits improved durability of its optical characteristics under a high temperature and high humidity condition, and a high temperature condition.

## Description

### TECHNICAL FIELD

The present invention relates to a polarizing film comprising a polyvinyl alcohol-based resin film and iodine being adsorbed thereon and oriented, and a polarizing plate and a liquid crystal display device using the film.

### BACKGROUND ART

Conventionally, a polarizing film comprising a polyvinyl alcohol-based resin film and iodine being adsorbed thereon and oriented has been known. Such a polarizing film is generally used as a polarizing plate laminated with a protecting film on the one side or the both sides, as one component for a liquid crystal display device. On the other hand, to realize color display superior in color reproducibility in a liquid crystal display device, it is desired to attain good white color display, and therefore, a polarizing film that has an achromatic hue when it is arranged at a parallel Nicol position, is desired. As such a polarizing film, for example, a polarizing film described in JP-A-2002-22950 is known.

Recently, in various fields such as a desktop electronic calculator, an electronic clock, a personal computer, a cellular phone, PDA (personal digital assistant) and instruments for an automobile or machinery, a liquid crystal display device has come to be used. With expanded application fields of a liquid crystal display device, durability improvement of a liquid crystal display device, responsive to the application use has been required. Specifically, in the case that it is used outdoors or in an automobile or as instruments for machinery, a liquid crystal display device durable for a long time use under a high temperature condition or a high humidity condition is required. Therefore, a polarizing film and a polarizing plate with less deterioration of optical characteristics, namely, with high durability when kept for a long time under a high temperature condition or under a high temperature and high humidity condition, is required. As such a polarizing film with improved durability under a high temperature and high humidity condition, for example, a polarizing film described in JP-A-2-43504 is known.

### DISCLOSURE OF THE INVENTION

### PROBLEMS TO BE SOLVED BY THE INVENTION

However, a conventional polarizing film with achromatic hue when it is arranged at a parallel Nicol position, as described above, had a problem of low durability of optical characteristics under a high temperature condition or under a high temperature and high humidity condition.

As a method for improving durability of a polarizing film with iodine adsorbed thereon and oriented, frequently used as an polarizing element, a method for increasing the content of potassium iodide or boric acid in a polarizing film, and the like have conventionally been known. When such a method for durability improvement was applied to the above-described conventional polarizing film with achromatic hue, and when, for example, the potassium iodide content was increased, it posed a problem of losing achromatic hue of a polarizing film and providing yellowish hue, although durability was improved. Also when the boric acid content was increased, on the contrary, it posed a problem of lowering durability of optical characteristics under high temperature condition although durability of optical characteristics under a high temperature and high humidity condition was improved.

The present invention, to solve the above-described problems, aims at providing a polarizing film with achromatic hue and also with highly durable optical characteristics under a high temperature and high humidity condition and a high temperature condition, when it is arranged at a parallel Nicol position. The present invention further aims at providing a polarizing plate and a liquid crystal display device with high durability, using said polarizing film.

### MEANS FOR SOLVING THE PROBLEM

The present inventors have intensively studied a way to solve the above-described problems and found that the above-described objectives could be attained by a polarizing film obtained by a polyvinyl alcohol-based resin film containing boric acid and a chlorine ion in specified range, along with a polarizing plate and a liquid crystal display device prepared therefrom, and thus completed the present invention. That is, the present invention has the following aspects:
(1) A polarizing film comprising a polyvinyl alcohol-based resin film and iodine being adsorbed thereon and oriented, characterized by containing boric acid and a chlorine ion of 200 to 10,000 ppm.
(2) The polarizing film according to (1), wherein the boric acid content in the polarizing film is 5 to 40% by weight.
(3) A method for preparation of the polarizing film according to (1) or (2), characterized by subjecting the polyvinyl alcohol-based resin film containing boric acid and iodine, obtained by subjecting the polyvinyl alcohol-based resin film to a treatment with iodine (a dyeing treatment), a stretching treatment and a treatment with boric acid (a boric acid treatment) in arbitrary order, to a treatment with an aqueous solution containing a chlorinated compound.
(4) The method for preparation of the polarizing film according to (1) or (2), characterized by subjecting the polyvinyl alcohol-based resin film, after subjecting to a treatment with iodine (a dyeing treatment), to a stretching treatment, a boric acid treatment and a treatment with an aqueous solution containing a chlorinated compound in this order.
(5) A polarizing plate characterized by being laminated with a protecting film on the one side or the both sides of the polarizing film according to (1) or (2).
(6) The polarizing plate according to (5), wherein the protecting film is an acetate-based resin film.
(7) The polarizing plate according to (5), wherein the protecting film is a polyolefin-based resin film.
(8) A liquid crystal display device equipped with the polarizing plate according to any one of (5) to (7).

### ADVANTAGES OF THE INVENTION

According to the present invention, a polarizing film and a polarizing plate, with achromatic hue and superior durability of optical characteristics under a high temperature condition, and under a high temperature and high humidity condition, can be realized. In addition to this, a liquid crystal display device with good white color display and high durability under a high temperature condition, and under a high temperature and high humidity condition, can be attained, which enables to further extend application fields of a liquid crystal display device.

### DETAILED DESCRIPTION OF THE INVENTION

Suitable embodiments of the present invention are now explained below.

The polarizing film applicable to the present invention is one comprising a polyvinyl alcohol-based resin film and iodine being adsorbed thereon and oriented and one prepared, for example, after subjecting a polyvinyl alcohol-based resin film to a dyeing treatment with iodine or simultaneously therewith, by subjecting it to a stretching treatment, a boric acid treatment and further to a complementary color treatment by means of immersing in an aqueous solution containing a chlorinated compound.

As raw material of the polyvinyl alcohol-based resin film, usually, polyvinyl alcohol or modified polyvinyl alcohol is used and the polymerization degree of the polyvinyl alcohol-based resin is in the range of about 1000 to 10,000, preferably in the range of 1500 to 5,000. Usually, saponified polyvinyl alcohol is used and the saponification degree the polyvinyl alcohol-based resin is usually in the range of about 85 to 100% by mole, preferably in the range of 98 to 100% by mole. The polyvinyl alcohol-based resin film is prepared by film forming of such a polyvinyl alcohol-based resin. The film forming can be carried out by a known method. Thickness of the polyvinyl alcohol-based resin film is usually about 50 µm to 150 µm.

After swelling of the polyvinyl alcohol-based resin film, it is subjected to the dyeing treatment with iodine. The dyeing treatment with iodine is carried out by immersing the above-described polyvinyl alcohol-based resin film in, for example, an aqueous solution containing iodine and potassium iodide and further in a dyeing solution containing boric acid. When an aqueous solution is used, as for the use amount of iodine and potassium iodide in said solution, iodine is about 0.01 to 0.3 parts by weight and potassium iodide is 0.01 to 3.0 parts by weight based on 100 parts by weight of water. Temperature of the dying solution is about 20 to 50 degree C. Immersion time is in the range of about 10 to 300 seconds. By such dyeing treatment with iodine, iodine is adsorbed on to the polyvinyl alcohol-based resin film.

Then, the stretching treatment is carried out for the polyvinyl alcohol-based resin film adsorbed with iodine to be uniaxially stretched in specified times. A stretching treatment is carried out while immersing the polyvinyl alcohol-based resin film in an aqueous solution of boric acid. The use amount of boric acid in the aqueous solution of boric acid is about 3.0 parts by weight of boric acid based on 100 parts by weight of water. Temperature of the aqueous solution of boric acid is, for example, about 30 to 60 degree C. As a stretching method, a method by a heated roll may be adopted or a method for uniaxial stretching between a pair of roles with different peripheral speed may be adopted. Stretch magnification of the original film is usually about 4.0 to 7.0 times.

The boric acid treatment is carried out by immersing the polyvinyl alcohol-based resin film after being subjected to the above-described dyeing treatment and stretching treatment, in an aqueous solution of boric acid. As the aqueous solution of boric acid in the boric acid treatment, such a solution is used as dissolved with boric acid in 3. 0 to 7. 0 parts by weight, preferably 4.0 to 6.0 parts by weight based on 100 parts by weight of water. Temperature of the aqueous solution of boric acid is, for example, not lower than 40 degree C, preferably 50 to 85 degree C. Immersion time is, for example, 10 to 600 seconds, preferably 30 to 300 seconds at the above-described temperature.

By the above-described stretching treatment and the boric acid treatment in the aqueous solution of boric acid, the polarizing film of the present invention is made to contain boric acid. The boric acid content of the polarizing film is 5 to 40% by weight, more preferably 15 to 25% by weight. By adjustment of each condition of boric acid concentration, immersion time and solution temperature in the stretching treatment and the boric acid treatment, the boric acid content of the polarizing film obtained is adjusted.

The complementary color treatment is carried out by means of immersing the polyvinyl alcohol-based resin film, after being subjected to the above-described dyeing treatment, stretching treatment and boric acid treatment, into an aqueous solution containing a chlorinated compound (hereinafter referred to as an aqueous solution of a chlorinated compound) . As the aqueous solution of a chlorinated compound, such a solution as dissolved with a chlorinated compound of 0.1 to 10 parts by weight, preferably 1.0 to 5.0 parts by weight based on 100 parts by weight of water, is used. Temperature of the aqueous solution of a chlorinated compound is, for example, 30 to 70 degree C. Immersion time is, for example, 10 to 300 seconds at the above-described temperature. By carrying out the complementary color treatment, such effects as to stabilize iodine ion state and make generation of color change difficult, can be obtained.

The chlorinated compound used in preparation of the aqueous solution of a chlorinated compound includes, for example, chlorinated compounds of alkali metals such as potassium chloride, sodium chloride and lithium chloride; or, chlorinated compounds of alkaline earth metals such as, for example, beryllium chloride, magnesium chloride and calcium chloride; or chlorinated metal compounds such as cobalt chloride and zinc chloride.

By carrying out the complementary color treatment, the polarizing film is made to contain a chlorine ion. The chlorine ion content of the polarizing film is 200 to 10,000 ppm, preferably 300 to 5,000 ppm. Thus, the polarizing film containing both boric acid and 200 to 10, 000 ppm of a chlorine ion can be obtained. After the complementary color treatment, the film is subjected to washing with water and a drying treatment. Drying temperature in the drying treatment is about 40 to 50 degree C and drying time is about 60 seconds.

The boric acid content of the polarizing film was determined by subjecting the polarizing film obtained to complete dissolution by heating in pure water and neutralization titration with an aqueous solution of NaOH by adding a phenolphthalein indicator. The chlorine ion content was determined by an ion chromatography method (DX-320 from Dionex Co., Ltd.).

The polarizing film of the present invention thus obtained, by containing boric acid and the specified amount of a chlorine ion, can realize high durability under a high temperature condition, and under a high temperature and high humidity condition, and also realize achromatic hue when it is arranged at a parallel Nicol position.

The present invention is by no means limited to the above-described embodiments, and various modified executions are possible. For example, although in the above-described embodiment, the stretching treatment is to carry out after the dyeing treatment with iodine, it may be carried out before the dyeing treatment with iodine or during the dyeing treatment with iodine. Also, the stretching treatment may be carried out during the boric acid treatment. It may be, for example, a dry type stretching treatment wherein stretching is carried out in the air. In the case of carrying out the stretching treatment during the dyeing treatment with iodine, or in the case of carrying out the stretching treatment during the boric acid treatment, or in the case of carrying out the dry type stretching, the boric acid content of the polarizing film obtained is so adjusted as to be within the range of 5 to 40% by weight with the boric acid treatment only.

As described above, when the stretching treatment is carried out simultaneously with the dyeing treatment with iodine or the boric acid treatment, or in the case of carrying out the dry type stretching, the boric acid content in the aqueous solution of boric acid for the boric acid treatment may be set higher than the range in the above-described embodiment, and immersion time may be longer than the range in the above-described embodiment.

Furthermore, for example, the stretching treatment may be executed multiple times separately, and the boric acid treatment may be executed multiple times. In addition to these, for example, boric acid may be contained in the iodine dyeing solution in the dyeing treatment with iodine. In these cases, boric acid concentration, immersion time and solution temperature in each treatment are not limited to the range in the above-described embodiments and can be so adjusted, as appropriate, as the boric acid content of the polarizing film to be 5 to 40% by weight.

The polarizing plate of the present invention is such one as laminated with a protective film on the one surface or both surfaces of the polarizing film of the present invention obtained as above. Here, the protective film is added for aiming at improvement of water resistance or handling of the polarizing film and transparent material can be used, as appropriate, for formation thereof. In particular, plastic superior in transparency, mechanical strength, heat stability and moisture shielding property is preferably used. As one example, films obtained from thermoplastic resins such as a polyester-based resin, a polyacetate-based resin, a polyethersulfone-based resin, a polycarbonate-based resin, a polyamide-based resin, a polyimide-based resin, a polyolefin-based resin, and an acryl-based resin; thermosetting resins such as acrylic-based, urethane-based, acryl-urethane-based, epoxy-based and silicone-based resins; or an ultraviolet-curable resin are included, and as a polyolefin-based resin among these resins, an amorphous polyolefin-based resin polymerized with cyclic hydrocarbon monomer unit, such as norbornene or polycyclic norbornene-based monomers, is included. A preferable protective film includes triacetyl cellulose (TAC) etc. Also, the transparent protecting film used as the protective film may be such one as obtained after being subjected to a hard coat treatment or a antireflection treatment and a treatment for sticking prevention or diffusion or antiglare, as long as not to impair objectives of the present invention.

An adhesion treatment between the polarizing film of the present invention and the protective film is not especially limited, and can be carried out by means of, for example, adhesives composed of a vinyl alcohol-based polymer; adhesives composed of water-soluble cross-linking agents for a vinyl alcohol-based polymer, such as boric acid or borax, glutaraldehyde, melamine and oxalic acid; solvent type adhesives of such as an epoxy-based resin with good transparency, a polyester-based resin and a vinyl acetate-based resin; or curable type adhesives by a polymerization reaction of, such as an acryl-based resin or a urethane-based resin.

The polarizing plate of the present invention can be used also as an optical component laminated to an optical layer of other optical material. For example, it can be used by lamination, in one layer or two layers or more, of appropriate optical material which may be used for formation of a liquid crystal display device such as a reflecting plate, a semi-transparent reflecting plate, a retardation plate (including a λ plate such as a 1/2 wavelength plate and a 1/4 wavelength plate), a viewing angle compensation film and a brightness improvement film. A specific example thereof includes, a reflection type polarizing plate or a semi-transparent reflection type polarizing plate made by further lamination of a reflecting plate or a semi-transparent reflecting plate on the polarizing plate of the present invention, similarly an elliptic polarizing plate or a circular polarizing plate made by further lamination of a retardation plate on the polarizing plate of the present invention, a polarizing plate made by lamination of a viewing angle compensation film on the polarizing plate of the present invention, or a polarizing plate made by further lamination of a brightness improvement film on the polarizing plate of the present invention.

Furthermore, various optical components using the polarizing plate of the present invention can preferably be used in formation of various devices such as a liquid crystal display device. For example, the polarizing plate of the present invention can be used in a liquid crystal display device of a reflecting type, a transparent type or a combination type of a transparent and reflecting type by arrangement thereof at the one side or the both sides of a liquid crystal cell. In this case, the liquid crystal cell to form a liquid crystal display device may be arbitrary one using an appropriate type of a liquid crystal cell, for example, such as an active matrix drive type represented by a thin film transistor type, and a simple matrix drive type represented by a twist nematic type or a super twist nematic type.

When the polarizing plates or optical components are set at the both sides of a liquid crystal cell, they may be the same ones or different ones. Furthermore, in forming a liquid crystal display device, for example, appropriate parts such as a prism array sheet or a lens array sheet, a light diffusion plate or a back light may be arranged in one layer or two or more layers at an appropriate position.

In the case of using the polarizing plate as a component of a liquid crystal display device, it may be so modified as to have an adhesion layer to facilitate adhesion with other components of a liquid crystal cell and the like at the one side or the both sides thereof. In formation of the adhesion layer, appropriate adhesive material or pressure-sensitive adhesives can be used and there is no special limitation. As an example, an appropriate polymer such as an acryl-based polymer or a silicone-based polymer, polyester or polyurethane, polyamide or polyether, a fluorine-based polymer or a rubber-based polymer and the like, is included as a base polymer.

The polarizing plate of the present invention can be used generally in a liquid crystal display device of such as a twist nematic system (TN), a super twist nematic system (STN), a thin film transistor system (TFT), a vertical alignment system (VA) and an in-plane switching system (IPS).

### EXAMPLE

The present invention is explained in more detail below by means of Examples.

### Example 1

After swelling a polyvinyl alcohol resin film (a thickness of 75 µm) (VF-XS from Kuraray Co., Ltd.) in water at 30 degree C for 5 minutes, it was immersed in a dyeing solution (containing 0.05 parts by weight of iodine and 0.1 parts by weight of potassium iodide based on 100 parts by weight of water) at 30 degree C for 5 minutes to carry out a dyeing treatment with iodine and subsequently stretched by 5.5 times in an aqueous solution of 3% by weight of boric acid at 50 degree C to obtain a stretched film. After the stretching treatment, the stretched film was immersed in an aqueous solution of 5% by weight of boric acid at 50 degree C for 2 minutes, then immersed in an aqueous solution of 1% by weight of potassium chloride at 30 degree C for 1 minute, washed with water and then dried in the air at 40 degree C to obtain the polarizing film of the present invention. Thickness of the polarizing film obtained was 25 µm. The boric acid content of the polarizing film was determined by a neutralization titration method and the chlorine ion content was determined by an ion chromatography method (DX-320 from Dionex Co., Ltd.). The boric acid content of the polarizing film was 22.0% by weight and the chlorine ion content was 1,100 ppm.

On the both surfaces of the polarizing film obtained, TAC film (a thickness of 80 µm) (T80UZ from Fuji Photo Film Co., Ltd.) was laminated using poval-based adhesive, and then dried at 70 degree C for 5 minutes to obtain a polarizing plate. This polarizing plate was achromatic, exhibiting hue a*=-1.01 and hue b*=0.64 in parallel Nicol (hues a* and b* show color coordinates specified by Commission Internationale de I' Eclairage (CIE)).

### Example 2

After swelling a polyvinyl alcohol film (VF-XS from Kuraray Co., Ltd.) in water at 30 degree C for 5 minutes, it was immersed in the dyeing solution (containing 0.05 parts by weight of iodine and 0.1 parts by weight of potassium iodide based on 100 parts by weight of water) at 30 degree C for 5 minutes to carry out a dyeing treatment with iodine and subsequently stretched by 5.5 times in the aqueous solution of 3% by weight of boric acid at 50 degree C. After the stretching treatment, the stretched film was immersed in the aqueous solution of 5% by weight of boric acid at 50 degree C for 2 minutes, then immersed in an aqueous solution of 1% by weight of sodium chloride at 30 degree C for 1 minute, washed with water and then dried in the air at 40 degree C to obtain the polarizing film of the present invention. The boric acid content of the polarizing film was 22.3% by weight and the chlorine ion content was 1,300 ppm.

On the both surfaces of the polarizing film obtained, TAC film (T80UZ from Fuji Photo Film Co., Ltd.) was laminated using poval-based adhesive, and then dried at 70 degree C for 5 minutes to obtain the polarizing plate of the present invention. This polarizing plate was achromatic, exhibiting hue a*=-1.18 and hue b*=0.62 in parallel Nicol.

### Example 3

After swelling a polyvinyl alcohol film (VF-XS from Kuraray Co., Ltd.) in water at 30 degree C for 5 minutes, it was immersed in the dyeing solution (containing 0.05 parts by weight of iodine and 0.1 parts by weight of potassium iodide based on 100 parts by weight of water) at 30 degree C for 5 minutes to carry out a dyeing treatment with iodine and subsequently stretched by 5.5 times in the aqueous solution of 3% by weight of boric acid at 50 degree C. After the stretching treatment, the stretched film was immersed in the aqueous solution of 5% by weight of boric acid at 50 degree C for 2 minutes, then immersed in an aqueous solution of 0.2% by weight of potassium chloride at 30 degree C for 1 minute, washed with water and then dried in the air at 40 degree C to obtain the polarizing film of the present invention. The boric acid content of the polarizing film was 22.5% by weight and the chlorine ion content was 310 ppm.

On the both surfaces of the polarizing film obtained, TAC film (T8OUZ from Fuji Photo Film Co., Ltd.) was laminated using poval-based adhesive, and then dried at 70 degree C for 5 minutes to obtain the polarizing plate of the present invention. This polarizing plate was achromatic, exhibiting hue a*=-0.87 and hue b*=0.59 in parallel Nicol.

### Example 4

After swelling a polyvinyl alcohol film (VF-XS from Kuraray Co., Ltd.) in water at 30 degree C for 5 minutes, it was immersed in the dyeing solution (containing 0.05 parts by weight of iodine and 0.1 parts by weight of potassium iodide based on 100 parts by weight of water) at 30 degree C for 5 minutes to carry out a dyeing treatment with iodine and subsequently stretched by 5.5 times in the aqueous solution of 3% by weight of boric acid at 50 degree C. After the stretching treatment, the stretched film was immersed in the aqueous solution of 5% by weight of boric acid at 50 degree C for 2 minutes, then immersed in an aqueous solution of 5% by weight of potassium chloride at 30 degree C for 1 minute, washed with water and then dried in the air at 40 degree C to obtain the polarizing film of the present invention. The boric acid content of the polarizing film was 21.5% by weight and the chlorine ion content was 5,000 ppm.

On the both surfaces of the polarizing film obtained, TAC film (T8OUZ from Fuji Photo Film Co., Ltd.) was laminated using poval-based adhesive, and then dried at 70 degree C for 5 minutes to obtain the polarizing plate of the present invention. This polarizing plate was achromatic, exhibiting hue a*=-0.91 and hue b*=0.49 in parallel Nicol.

### Comparative Example 1

After swelling a polyvinyl alcohol film (a thickness of 75 µm) (VF-XH from Kuraray Co., Ltd.) in water at 30 degree C for 5 minutes, it was immersed in the dyeing solution (containing 0.05 parts by weight of iodine and 0.1 parts by weight of potassium iodide based on 100 parts by weight of water) at 35 degree C for 5 minutes to carry out a dyeing treatment with iodine and subsequently stretched by 4. 7 times in an aqueous solution of 2% by weight of boric acid at 50 degree C. After the stretching treatment, the stretched film was washed in water at 25 degree C for 2 minutes and then dried in the air at 40 degree C to obtain a polarizing film for comparison. The boric acid content of the polarizing film was 16.5 % by weight and the chlorine ion content was 30 ppm.

On the both surfaces of the polarizing film obtained, TAC film (T80UZ from Fuji Photo Film Co., Ltd.) was laminated using poval-based adhesive, and then dried at 60 degree C for 5 minutes to obtain a polarizing plate. This polarizing plate was achromatic, exhibiting hue a*=-0.87 and hue b*=0.68 in parallel Nicol.

The polarizing plates obtained in Example 1 to Example 4 of the present invention or the comparative polarizing plates obtained in Comparative Example 1 for comparison were sticked on a glass substrate and a liquid crystal cell (LCD) similarly in using as a component of a usual liquid crystal display device, and subjected to tests under environmental conditions of a high temperature condition (85 degree C) and a high temperature and high humidity condition (60 degree C * 90%RH), and results are shown in Table 1.

**Table 1 Performance Test**

| | 85C×1000h | | 60C×90%RH×1000h | | Laminating result on LCD # |
|---|---|---|---|---|---|
| | Change in polarization degree | Color change Δ (a*.b*) | Change in polarization degree | Color change Δ (a*.b*) | |
| Example 1 | +0.3 | 1.9 | -11.9 | 0.8 | A |
| Example 2 | +0.5 | 2.1 | -12.4 | 0.9 | A |
| Example 3 | +0.3 | 1.8 | -15.7 | 2.8 | A |
| Example 4 | +0.3 | 2.0 | -14.4 | 2.2 | A |
| Comp. Example. 1 | +1.8 | 10.4 | -26.5 | 4.1 | B |

| | | | | | |
|---|---|---|---|---|---|
| (Note) #: In "laminating result on LCD" column, | | | | | |
| "A" represents "no display problems" and | | | | | |
| "B" represents "too pale display to discriminate". | | | | | |

Table 1 shows "change in polarization degree", "color change (Δ (a*.b*))" and "laminating result on LCD", when the tests were carried out by kept for 1000 hours under a high temperature condition (85 degree C), or a high temperature and high humidity condition (60 degree C * 90% RH). Here, "change in polarization degree" means difference in polarization degree before the test and after the test and "+" represents increased polarization degree after the test than polarization degree before the test, while "-" represents decreased polarization degree after the test than polarization degree before the test. Further, "color change (Δ (a*_{·} b*))" is represented by the numerical equation of [(Δa*)²+(Δb*)²]^{1/2}. Values of Δa* and Δb* represent change amount of hue Δa* and change amount of hue Δb* in parallel Nicol before the test and after the test, respectively. Namely, Δ(a*_{·} b*) represents hue change of the polarizing plate before the test and after the test. "Laminating result on LCD" is result of naked eye evaluation of liquid crystal display state after each test.

### INDUSTRIAL APPLICABILITY

As shown in Table 1, the polarizing plates of the present invention, when kept for a long time (1000 h) under a high temperature condition (85 degree C) and a high temperature and high humidity condition (60 degree C * 90% RH), show smaller change in polarization degree than that of the polarizing plate shown by Comparative Example 1, and express improved durability. Also as for color change (Δ(a*_{·} b*)), the values of the polarizing plates of the present invention are smaller than value of the polarizing plate shown by Comparative Example 1. This means little color change occurred on the polarizing plate of the present invention, namely, retention of achromatic hue even after the tests. In addition to these, there were no problems to be occurred on liquid crystal display state of the present invention.

## Claims

1. A polarizing film comprising a polyvinyl alcohol-based resin film and iodine being adsorbed thereon and oriented, **characterized by** containing boric acid and a chlorine ion of 200 to 10,000 ppm.

2. The polarizing film according to Claim 1, wherein the boric acid content in the polarizing film is 5 to 40% by weight.

3. A method for preparation of the polarizing film according to Claim 1 or Claim 2, **characterized by** subj ecting the polyvinyl alcohol-based resin film containing boric acid and iodine, obtained by subjecting the polyvinyl alcohol-based resin film to a treatment with iodine (a dyeing treatment), a stretching treatment and a treatment with boric acid (a boric acid treatment) in arbitrary order, to a treatment with an aqueous solution containing a chlorinated compound.

4. The method for preparation of the polarizing film according to Claim 1 or Claim 2, **characterized by** subjecting the polyvinyl alcohol-based resin film, after subjecting to a treatment with iodine (a dyeing treatment), to a stretching treatment, a boric acid treatment and a treatment with an aqueous solution containing a chlorinated compound in this order.

5. A polarizing plate **characterized by** being laminated with a protecting film on the one side or the both sides of the polarizing film according to Claim 1 or Claim 2.

6. The polarizing plate according to Claim 5, wherein the protecting film is an acetate-based resin film.

7. The polarizing plate according to Claim 5, wherein the protecting film is a polyolefin-based resin film.

8. A liquid crystal display device equipped with the polarizing plate according to any one of Claim 5 to Claim 7.
